# EUROPEAN PATENT APPLICATION

(11) **EP 1 127 497 A1**
(43) Date of publication of application: **29.08.2001**
(21) Application number: 99949411.5
(22) Date of filing: 26.10.1999
(51) Int. Cl.: A23L 1/33

(54) **DRY KRILL POWDER**

(30) Priority: 02.11.1998 JP 31173098
(71) Applicant: Nippon Suisan Kaisha, Ltd., Tokyo 100-0004 (JP)
(72) Inventor: YOSHITOMI, Bunji, Nippon Suisan Kaisha, Ltd., Hachioji-shi, Tokyo 192-0906 (JP); SHIGEMATU, Yoshiaki, Chiyoda-ku, Tokyo 100-0004 (JP)
(74) Representative: Leson, Thomas Johannes Alois, Dipl.-Ing.
(86) International application number: JP9905892
(87) International publication number: WO0025608

(57) **Abstract**

A dried powdery and granular krill product containing all components of krill. The proteolytic enzymes originally contained in krill materials are perfectly disabled. The product is produced by a process including only heating as means for denaturing protein and disabling the proteolytic enzymes originally contained in krill materials. The product is produced by a process including no chemicals treatment to remove water and disable or inactivate the proteolytic enzymes in any production steps, and generating no wastewater. The production process comprises the steps of lightly dehydrating krill, coarsely crushing the krill, and drying the coarsely crushed krill under heating. Thus, water is removed from the krill by only heating, and degradation of the lipid in the krill product is prevented without using an anti-oxidant. Application fields are enlarged and the preservation characteristic is improved. The so-called zero-emission method and product, generating no wastes, are realized.

## Description

### BACKGROUND OF THE INVENTION

### Field of the Invention

The present invention relates to a dried powdery and granular krill product which contains all components of krill and in which lipid degradation is sufficiently prevented with no need of an anti-oxidant.

### Description of the Prior Art

Krill are animal plankton living primarily in the Arctic and Antarctic Oceans, and about 80 kinds of krill have been known up to date. Of those many kinds of krill, Antarctic Krill (*Euphasia superba*) living in the Antarctic Ocean are found in abundance as one of natural resources. Therefore, survey of the resource and development of the method of catching the krill have been extensively conducted in the period of 1970 to 1985, including studies for developing methods of processing the krill to be useful in practical applications.

Krill are comparable to fish, flesh and fowl in point of nutritive value, but there are several problems in processing the krill for practical applications. One of the problems is that krill lose freshness in short time. If krill are left to stand after being caught, the heads and chests of the krill start changing into black color in 1 - 2 hours even at a low atmospheric temperature of about 0 °C. Further, shells of the heads and chests of krill are so vulnerable to external pressure that the krill are easily broken down upon impacts applied at the time of catching, whereupon the enzymes present in the internal organs flow out and decompose muscles. Those phenomena occur under actions of the enzymes present in krill. It is thought that tyrosinase is responsible for the former color-changing phenomenon, and protease is responsible for the latter muscle-decomposing phenomenon.

Accordingly, those enzymes require to be disabled or inactivated when processing krill. In other words, it has been required immediately after catching krill to quickly freeze the krill down to below - 40 °C, thereby inactivating the enzymes, or to heat the krill up to above 80 °C, thereby disabling the enzymes, followed by preserving the krill.

Known krill products include raw frozen and peeled krill products which are subjected to quick freezing and then preserved in a frozen condition, boiled krill products which are heated and then preserved in a frozen condition, and krill meal which is heated and dried and then preserrved at the normal temperature. The following Tables 1 and 2 list classifications of those products depending on how krill are processed, and features and points to be improved of the products.

The known products are used in various applications. However, because the products are transported from the Antarctic Ocean to Japan, the product price greatly depends on the transportation cost. There is hence a desire for extracting excellent characteristics of krill more efficiently and realizing krill products having a higher value added.

**[Table 1]**

| Processing | Processing Object | Product Examples |
|---|---|---|
| Quick freezing, Preserve in frozen condition | Inactivate enzymes | Raw frozen and stripped krill |
| Heating, Preserve in frozen condition | Disable enzymes | Boiled krill |
| Heating & drying, Preserve at normal temperature | Disable enzymes | Krill meal |

**[Table 2]**

| Product Examples | Features | Points to be improved |
|---|---|---|
| Raw frozen and stripped krill | Products have flavor, taste and feeling of raw krill. | Remaining high water content and activity of enzymes necessitate storage and distribution in frozen state. Enzymes are activated upon thawing and product quality degrades. Drips flow out. |
| Boiled krill | Heating disables enzymes and makes protein stable to give meat-like feeling. | Flavor and taste components flow out during boiling. Cold chain is required because of high water content. |
| Krill meal | Heating disables enzymes and makes protein stable. Meal can be stored at normal temp. because of low water content. | Digestibility lowers due to protein denaturation during heating. Water-soluble components flow out into stickwater. |

Japanese Unexamined Patent Publication No. 57-11876 discloses a method of impeding activity of the proteolytic enzymes in krill and utilizing the krill as protein materials. With the disclosed method, a krill paste is degenerated with alcohol to effect fixation (denaturation) of protein and degeneration of the enzymes at the same time. The processed krill paste is then washed with water to remove alcohol. The disclosed method however has the following problems.
1. Water-soluble protein and low-molecular protein, which are not yet denatured, are removed together with alcohol during washing with water.
2. Free amino acids and extract components, which are taking in part of providing good taste, are also removed together with alcohol during washing with water.
3. Polar lipid is removed together with alcohol during washing with water. Most of the lipid in krill is phospholipid and is rich in polyunsaturated fatty acids (PUFAs). Thus these PUFAs are removed.
4. Alcohol can be recovered and reused, but an alcohol recovery system pushes up the cost. For the above reasons, the above-disclosed method has difficulties in realizing practical use.

Further, Japanese Unexamined Patent Publication No. 8-298967 discloses a method of producing dried shrimp granules. With this disclosed method, raw shrimps are crushed by a mincing apparatus (meat grinder) into the form of ground meat. The ground meat is then heated under agitation, followed by drying.

More specifically, according to the embodiment disclosed in the above Publication, shrimp materials are first crushed into the form of ground meat. The ground meat described in the embodiment includes not only the meat in the completely ground form, but also fragments of shrimps in the finely chopped form. Concretely, the above process is performed by a meat grinder which is used for producing mince or the like. Also according to the description in the embodiment, a maximum grain size representing the coarsely ground state is about 2 mm square. The shrimp materials thus processed are dried under heating to thereby provide dried shrimp granules. Considering specific properties of krill, however, it is inferred that even if krill are dried under heating after being processed in a similar manner as in the prior art, ground krill are very difficult to dry into a satisfactory condition.

From intensive studies, the inventors found that when krill are processed in a similar manner as in the prior art, lipid, protein and water contained in the krill are brought into an emulsified state, and the processed krill are very difficult to dry even with a heating and drying machine. Such a difficulty is related to the fact that most of the lipid in krill is phospholipid,-as described above, and therefore emulsification is further increased. In other words, water in the krill is stabilized in structure with emulsification and becomes still harder to evaporate under heating.

In addition, when krill are crushed into the form of ground meat, the proteolytic enzymes present in the internal organs of the krill develop activity, and a temperature rise during the grinding process increases the activity of those enzymes. As a consequence, proteolysis in the krill is promoted and specific taste is deteriorated.

Moreover, when ground materials are dried by a heating and drying machine, the materials come into contact with a heating surface of the machine, and a coating(a layer) grows gradually. Then, there occurs finally such a phenomenon that the materials adhering to the heating surface are scorched. To prevent the occurrence of such a phenomenon, the heating surface of the machine must be scraped by a stirring vane or the like. Taking into account the structure and accuracy of the machine and an influence of thermal expansion of the machine under heating, however, it is very difficult to always keep constant a gap between the heating surface and the tip of the stirring vane. As a result, the materials cannot be avoided from being scorched, thus leading to a deterioration of flavor and taste and a lowering of digestibility.

### SUMMARY OF THE INVENTION

An object of the present invention is therefore to effectively utilize krill as one of valuable aquatic resources, and to provide a dried powdery and granular krill product and a method of producing the dried powdery and granular krill product, which contains all components of krill and has a good preservation ability while activity of the enzymes in the krill is totally disabled.

The present invention resides in a dried powdery and granular krill product that contains all components of krill. Because of containing all components of krill, the present product has a function capable of sufficiently preventing degradation of the lipid in the krill product without using an anti-oxidant. In the dried powdery and granular krill product, the proteolytic enzymes originally contained in krill materials are perfectly disabled. Accordingly, the present invention also resides in a dried powdery and granular krill product which contains all components of krill and in which the proteolytic enzymes originally contained in krill materials are perfectly disabled. The present product is produced by a process including only heating as means for denaturing protein and disabling the proteolytic enzymes originally contained in krill materials. Accordingly, the present invention further resides in a dried powdery and granular krill product which contains all components of krill, in which the proteolytic enzymes originally contained in krill materials are perfectly disabled, and which is produced by a process including only heating as means for denaturing protein and disabling the proteolytic enzymes originally contained in krill materials.

The dried powdery and granular krill product of the present invention is produced by a process including no chemicals treatment to remove water and disable or inactivate the proteolytic enzymes in any production steps, and generating no wastewater. The production process comprises the steps of lightly dehydrating krill, coarsely crushing the krill, and drying the coarsely crushed krill under heating.

The dried powdery and granular krill product of the present invention is subjected to no chemical treatment using chemicals, etc. in any production steps, and is processed by only heating. Also, there is no step in the production process in which wastewater is generated. Thus, water is removed from the krill by only heating. Moreover, application fields are enlarged and the preservation characteristic is improved. The so-called zero-emission method and product, generating no wastes, are realized.

The production method of the present invention comprises steps of removing seawater from krill, coarsely crushing the krill, and drying the coarsely crushed krill under heating. In the conventional process of producing krill meal, krill are first boiled in water in the same amount as the krill, and are then subjected to separation into solid and liquid components. The solid component is heated and dried using a drier. The liquid component obtained from the solid/liquid separation is called stickwater and preserved separately. For this reason, the conventional krill meal contains less water-soluble components than the krill product of the present invention, and therefore has disadvantages in not providing satisfactory flavor and taste in the extracted form, etc. and attractiveness of feed to fish under cultivation, etc. Further, the conventional production process is disadvantageous in that protein is excessively denatured by heating applied in both the boiling and heating/drying steps, and digestibility of the product is reduced.

### BRIEF DESCRIPTION OF THE DRAWINGS

Fig. 1 is a graph showing activity of the proteolytic enzymes remaining in raw krill and the product of the present invention; and
Fig. 2 is a schematic view of a production line for the product of the present invention.

### DESCRIPTION OF THE PREFERRED EMBODIMENT

There are 80 or more kinds of krill as described above, but the kind of krill used in the present invention is not restricted. In addition to krill, mysids are also usable.

Krill primarily used in an embodiment are Antarctic Krill (*Euphasia superba*) which have been employed in industrial fields.

A production process will be described below.

Krill used as materials are put into a fish tank at once after being caught. The krill are then put in a dehydrator to remove seawater, etc. attaching to the krill surfaces. The type of the dehydrator is not particularly restricted, but outer shells of krill are so fragile that the shells are easily broken down under pressure of 40 - 140 g/cm² and the internal components flow out. Therefore, the type of the dehydrator is preferably selected so that an excessive physical load will not be applied to krill.

The dehydrated krill are chopped to improve thermal efficiency in the heating and drying process. The type of a machine used for chopping the krill is not particularly restricted. The grain size of the chopped krill is selected to a coarsely crushed state, i.e., about 1.5 - 2.5 cm square, at which outer shells and muscular tissues of the krill materials remain. This process can be performed with, e.g., a known mincing apparatus, which is usually employed for grinding meat into mince, by properly selecting the opening size of a perforated plate.

The chopped krill are dried under heating. The type of a machine for use in this process is also not particularly restricted. While a known heating and drying machine such as a steam type disk dryer, for example, can be used, the machine is preferably adjustable in heating time, heating temperature, degree of agitation, and so forth. Because the internal components of krill as one of natural resources change depending on the season, it is desired to adjust the parameters of the machine in match with the change of the internal components of krill for obtaining products with constant quality.

The heating time and the heating temperature are set to such an extent that the muscular protein of krill and the proteolytic enzymes in krill are denatured and degenerated under heating, and that the water content is reduced down to below 10 % from a point of ensuring good preservation. It is important that the heating and drying process is not performed at overly high temperatures and for an overly long time, and is performed at the necessary lower limit values to satisfy the above-described conditions. Excessive heating lowers digestibility due to extreme denaturation, reduces astaxanthin, natural dye, present in krill, reduces vitamins, and oxidizes lipid. On the other hand, if heating is insufficient, activity of the proteolytic enzymes in krill remains, which leads to a deterioration of product quality. If the water content is over ten and several percents, the krill product gathers mold during preservation.

The dried krill are very fragile, including the shells, and therefore can be easily crushed any desired grain size.

The krill product of the present invention can be used as a main material of feed for cultured fish in place of fish powder, and in food applications it can be mixed as a shrimp taste seasoning in fish-paste products, etc.

In view of that the problem described above in connection with the prior art is attributable to crushing of raw materials into the form of ground meat, krill materials are first chopped into pieces having a size of 20 - 30 % of the body length (about 1.5 - 2.5 cm square) and are then put into a heating and drying machine in the present invention. As a result, the krill materials are avoided from being emulsified and the drying efficiency is enhanced. Further, strong activity of the proteolytic enzymes present in the internal organs of krill is suppressed and an adverse influence upon flavor and taste of the krill product is reduced. In addition, the chopped krill do not adhere to the heating surface and can be heated appropriately, thus greatly contributing to improvement of product quality.

Moreover, since the dried krill product obtained in accordance with the method of the present invention has a large grain size and maintains a fair part of shapes of the krill materials, it is also possible to produce products utilizing the shapes of the krill materials advantageously. Additionally, the dried krill can be simply crushed into a desired grain size as required.

Thus, it can be said that the present invention provides a dried product that has a different quality and is produced through a different process from those obtained with and described in the prior art, i.e., Japanese Unexamined Patent Publication No. 8-298967.

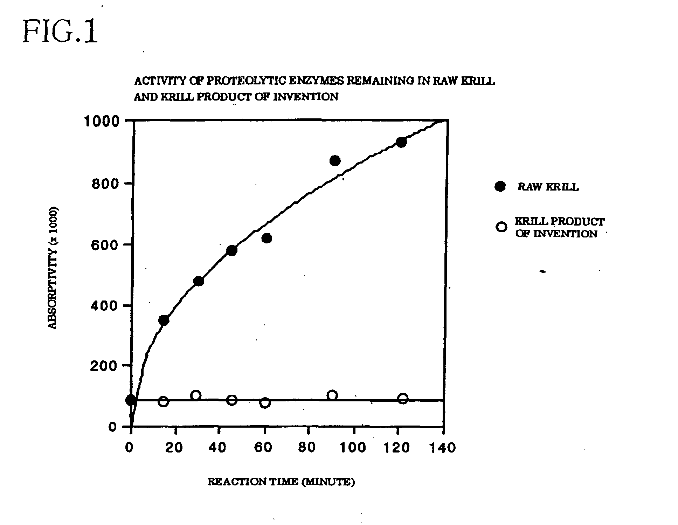

Fig. 1 shows comparatively activity of the proteolytic enzymes remaining in raw krill and the krill product of the present invention.

In the graph of Fig. 1, the activity of the remaining proteolytic enzymes is plotted at each period of reaction time based on a measurement index, i.e., the absorptivity at 440 nm, by using azocasein as a substrate. As will be seen from Fig. 1, the activity of the remaining proteolytic enzymes in the raw krill is increased with lapse of the reaction time, while the activity of the remaining proteolytic enzymes in the krill product of the present invention is hardly changed. This suggests that the proteolytic enzymes remain not alive in the krill product of the present invention and they are perfectly disabled in the production process, and that a possibility of quality deterioration of the krill product during the preservation is low.

Preservation characteristics of the krill product of the present invention will be described with reference to Tables 3 and 4 below.

For comparison, the results listed in Table 3 were obtained by preparing two groups of the krill product of the present invention, in one of which ethoxyquin that is most generally used as an anti-oxidant in meal, etc. was added to the krill product and in the other of which no ethoxyquin was added, and then measuring a change of product quality by using a degradation of the lipid as an index for a period of two months during which the two groups were preserved at 37 °C. To make distinct a difference in change occurred during the preservation, 300 ppm of ethoxyquin, which is double the amount added in usual cases, was added to the group added with ethoxyquin.

As will be seen from Table 3, a significant difference in change of the lipid was not found until the end of one month between the group added with no anti-oxidant and the group added with the anti-oxidant. Also, during the second month, oxidation proceeded slightly faster in the group added with no anti-oxidant than the group added with the anti-oxidant, but a significant difference was not found.

There are several indexes indicating a degree of lipid degradation. About the lipid in krill, particularly, the krill lipid having been extracted and refined, it is known that, during the preservation, a peroxide value hardly increases and only a carbonyl value increases. In other words, it is pointed out that degradation of the krill lipid differs in creation of oxides and progress rate of the decomposing reaction from those in general fish oil, etc.

**[Table 3]**

| | Acid value | | Peroxide value | | Carbonyl value | |
|---|---|---|---|---|---|---|
| | no antioxidant *1 | with antioxidant *2 | no antioxidant | with antioxidant | no antioxidant | with antioxidant |
| Preserva tion start | 18.1 | 192. | 1.8 | 4.1 | 67.6 | 60.5 |
| After 1 month at 37 °C | 21.9 | 22.6 | 6.0 | 7.0 | 75.6 | 81.3 |
| After 2 months at 37 °C | 21.3 | 23.6 | 10.7 | 6.2 | 93.5 | 78.6 |

| | | | | | | |
|---|---|---|---|---|---|---|
| *1: No ethoxyquin added | | | | | | |
| *2: 300 ppm of ethoxyquin added | | | | | | |

Furthermore, as will be seen from Table 4, a phenomenon of the lipid degrading at apparently different rates during the preservation was found between the krill product of the present invention and a control prepared by perfectly removing all the water-soluble components originally present in krill from the krill product of the present invention. Although the material responsible for the above phenomenon is not yet known, it is believed that the water-soluble components originally present in krill have some anti-oxidizing action. For this reason, in the krill product of the present invention which contains all the components of krill in an enriched condition, lipid degradation can be prevented satisfactorily without using any anti-oxidant.

**[Table 4]**

| | Peroxide value | | Carbonyl value | |
|---|---|---|---|---|
| | product of invention | water-soluble components removed | product of invention | water-soluble components removed |
| Preservation start | 0 | 0 | 69.5 | 87.7 |
| After 1 month at 30 °C | 0 | 0 | 53.9 | 71.7 |
| After 3 months at 30 °C | 0 | 0 | 63.0 | 76.9 |
| After 6 months at 30 °C | 6.9 | 10.5 | 89.1 | 142.3 |
| After 12 months at 30 °C | 11.8 | 20.7 | 127.1 | 202.6 |

### <Example>

The present invention will be described in more detail in connection with Example. It should be understood that the present invention is limited in no way by the following Example.

### Example 1

### 1. Process Flow Including Plant for Drying Krill

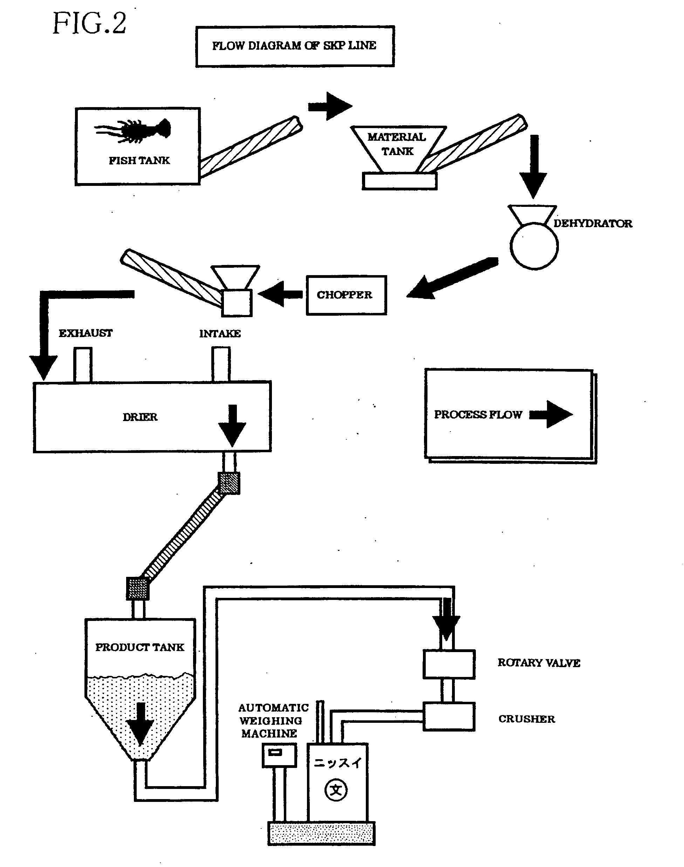

An outline of the process flow is as shown in Fig. 2. Krill materials are first conveyed by a krill supply apparatus from a fish tank to a material tank, and are then supplied to a dehydrator in a proper lot. The use of a dehydrator basically intends to remove seawater contained in the krill materials. Since it is expected that the amount of water contained in krill varies depending on the materials, a diaphragm is adjusted to provide a proper dehydration rate, taking into account the performance of the dehydrator. The dehydrated materials are coarsely crushed by a chopper and are then supplied to a drier. The materials are boiled in the drier under heating with vapor, followed by further drying. At the time when reaching a predetermined water content, the drying is stopped and a resulting dried semifinished product is ejected. The dried semifinished product is conveyed to a product tank, and is then automatically packaged into bags in units of predetermined weight after passing a rotary valve, a crusher and so on.

The conventional production process for krill meal is represented by raw krill → boiling → centrifugal separation or solid/liquid separation → extraction of solid → drying → crushing → packaging. The liquid component was removed in the centrifugal separation step, and the useful components of krill contained in the liquid component were discarded. It can be said from one aspect that the krill meal was a product resulted from drying the sludge.

By contrast, the process flow for producing the krill product of the present invention is represented by raw krill → removal of water attached to krill → boiling → drying → crushing → packaging. The centrifugal separation step is not included. In the boiling and drying steps; the enzymes in krill are disabled and the krill components are stabilized through thermal degeneration. Thus, the components originally contained in the krill are all kept in the product without being discarded externally. An apparatus for implementing the above process is featured in omitting a step of squeezing boiled krill using a decanter or a press. The krill drying apparatus used in the present invention differs from the conventional meal producing apparatus in that a cooker and a drier are combined in an integral structure.

### 2. Component Analytical Values

Table 5 lists component analytical values of the krill product of the present invention. For comparison, Table 5 also lists component analytical values of the krill meal produced by the conventional process. In particular, the krill product of the present invention contains free amino acids as much as more than twice the amount contained in the conventional krill meal. The free amino acids deeply take part in developing flavor and taste of the product when eaten, attractant of feed to fish under cultivation, etc.

Since the squeezing step subsequent to boiling of the krill materials is omitted, the components developing flavor and taste are not lost and the krill product of the present invention has good flavor. Further, the production process of the present invention generates no appreciable wastewater and provides a high yield.

**[Table 5]**

| | Krill meal | Product of invention |
|---|---|---|
| Water | 6.5 | 8.3 |
| Coarse protein | 64.0 | 65.1 |
| (Free amino acid) | (2.9) | (7.54) |
| Coarse fat | 7.0 | 7.0 |
| Coarse ash | 16.7 | 18.0 |
| Coarse fiber | 3.2 | 2.1 |

According to the present invention, a method is provided which can effectively utilize krill, as one of important aquatic resources, in a perfect manner without any loss due to efflux of krill components. The dried powdery and granular krill product obtained by the present invention contains all the components originally contained in the krill, and strong activity of the enzymes specific to the krill is disabled. Therefore, the krill product of the present invention can be widely applied to not only the feed industry, but also the food industry.

## Claims

1. A dried powdery and granular krill product containing all components of krill.

2. A dried powdery and granular krill product according to Claim 1, wherein the proteolytic enzymes originally contained in krill materials are perfectly disabled.

3. A dried powdery and granular krill product according to Claim 1 or 2, wherein said product is produced by a process including only heating as means for denaturing protein and disabling the proteolytic enzymes originally contained in krill materials.

4. A dried powdery and granular krill product according to Claim 1, 2 or 3, wherein said product is produced by a process including no chemicals treatment to remove water and disable or inactivate the proteolytic enzymes in any production steps, and generating no wastewater.

5. A dried powdery and granular krill product according to any one of Claims 1 to 4, wherein said product is produced by a process comprising the steps of lightly dehydrating krill, coarsely crushing the krill, and drying the coarsely crushed krill under heating.
